# EUROPEAN PATENT APPLICATION

(11) **EP 3 388 967 A1**
(43) Date of publication of application: **17.10.2018**
(21) Application number: 17305441.2
(22) Date of filing: 13.04.2017
(51) Int. Cl.: G06F 21/55, H04L 29/06

(54) **NETWORK DEVICE AND METHOD FOR DETERMINING SECURITY PROBLEMS IN SUCH A NETWORK DEVICE**

(71) Applicant: Thomson Licensing, 92130 Issy-les-Moulineaux (FR)
(72) Inventor: LE MERRER, Erwan, 35576 Cesson Sévigné (FR); FILOCHE, Thierry, 35576 Cesson Sévigné (FR); CLAIRAY, Nicolas, 35576 Cesson Sévigné (FR); HEEN, Olivier, 35576 Cesson Sévigné (FR)
(74) Representative: Ståhl, Björn Niclas

(57) **Abstract**

A device (110) such as a gateway comprises a communication interface (113) configured to receive an inbound HTTP connection via a network (140), memory (112) configured to store a list of domain names corresponding to web search engines and at least one hardware processor (111) configured to obtain (S210) an IP address of a device from the inbound HTTP connection, obtain (S220), for example using reverse DNS, a domain name corresponding to the IP address, determine (S230) that the device is open to the network (140) if the domain name is on the list of domain names corresponding to web search engines and, in case the device is open to the network (140), perform (S240) an action.

## Description

### TECHNICAL FIELD

The present disclosure relates generally to network security and in particular to security of network devices.

### BACKGROUND

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

A gateway (GW) connects an internal network and an external network, typically the Internet. Typically, a GW can be administered through an administrative HyperText Markup Language (HTML) page, run locally by the GW using a HyperText Transfer Protocol (HTTP) server (e.g. Apache or NGINX). Via this HTML page, a user can configure GW functionalities. To access the administrative HTML page, the user typically connects from the local network to predetermined ports in the GW, conventionally 80, 8080, 443 and 8443.

The GW can usually also be administered remotely, i.e. from a remote computer in the external network. A main use of this possibility is remote troubleshooting of the GW by an Internet Service Provider's (ISP) helpdesk. Usually, this requires the GW to open its firewall on at least some ports, thus leaving the GW exposed to the Internet. Once the troubleshooting is over, the GW firewall is closed again, ending the exposure to the Internet. Some recent gateways include a timer whose timeout normally causes the closing of the remote port.

However, it can happen that GWs are misconfigured or that the GW firewall is not properly closed, leaving such GWs remain exposed to the Internet after troubleshooting, possibly long enough for web search engines (e.g. Bing, Google and Yahoo!) to index these GWs. A possible countermeasure is to put indications such as "Disallow: /" in a robot.txt file stored by the GWs, which at least in theory should stop web crawlers from indexing the GW, but this is not the always the case since not all web crawlers respect such indications.

In addition, sites such Shodan (www.shodan.io) provide information, previously gathered through web crawling, about devices, including GWs, connected to the Internet. Device owners and hackers alike can use the site to vulnerabilities in indexed devices. This can result in a security risk for owners and users of indexed GWs.

One solution to this problem is simply to close the GWs found on such a site remotely. However, doing this would not be very timely or reactive, and it would further require a possibly large infrastructure to monitor such sites or to crawl the Internet in search of GWs open to the Internet.

Another solution could be to block remote administration connections from all but some legitimate IP addresses, but this solution is hardly viable since remote administration connections could legitimately come from anywhere on Earth (and thus from virtually any IP address. In addition, the situation could occur where remote administration is impossible if a legitimate administrator does not have an allowed IP address.

It will thus be appreciated that there is a desire for a solution that addresses at least some of the shortcomings of the conventional devices. The present principles provide such a solution.

### SUMMARY OF DISCLOSURE

In a first aspect, the present principles are directed to a device comprising a communication interface configured to receive an inbound connection via a network and at least one hardware processor configured to obtain a first identifier of an originating device from the inbound connection, determine that the device is open to the network in case the first identifier is on a list of second identifiers corresponding to web search engines, and, in case the device is open to the network, perform an action intended to result in the device being closed to the network.

Various embodiments of the first aspect include:
- That the device further comprises memory configured to store the list of identifiers corresponding to web search engines.
- That the first identifier is an Internet Protocol address, the second identifiers are domain names and that the at least one hardware processor is further configured to obtain a domain name corresponding to the IP address;
- That the action is at least one of: refusing the inbound connection, sending an alert message, rendering an alert message on a user interface of the device, and closing a firewall of the device against IP addresses.
- That the at least one hardware processor is configured to obtain the IP address by reading a log for incoming connections.
- That the device is a gateway, a cable modem or a network-attached storage.
- That the domain name is obtained using reverse Domain Name Server (DNS).
- That the inbound connection is a HyperText Transfer Protocol (HTTP) connection.

In a second aspect, the present principles are directed to a method for determining if a device is open to a network. At least one hardware processor of the device obtains a first identifier of an originating device from an inbound connection, determines that the device is open to the network in case the obtained first identifier is on a list of second identifiers corresponding to web search engines, and, in case the device is open to the network, performs an action intended to result in the device being closed to the network.

Various embodiments of the second aspect include:
- That the action is at least one of: refusing the inbound connection, sending an alert message, rendering an alert message on a user interface of the device,and closing a firewall of the device against IP addresses.
- That the obtaining is performed by reading a log for incoming connections.
- That the first identifier is an Internet Protocol address and the second identifiers are domain names, and wherein the method further comprises obtaining (S220), by the at least one hardware processor, a domain name corresponding to the Internet Protocol address. The domain name can be obtained using reverse Domain Name Server (DNS).

In a third aspect, the present principles are directed to a computer program comprising program code instructions executable by a processor for implementing a method according to any embodiment of the second aspect.

In a fourth aspect, the present principles are directed to a computer program product which is stored on a non-transitory computer readable medium and comprises program code instructions executable by a processor for implementing a method according to any embodiment of the second aspect.

### BRIEF DESCRIPTION OF DRAWINGS

Features of the present principles will now be described, by way of nonlimiting example, with reference to the accompanying drawings, in which:
Figure 1 illustrates an exemplary system implementing the present principles; and
Figure 2 illustrates a method for determining if a gateway is vulnerable according to an embodiment of the present principles.

### DESCRIPTION OF EMBODIMENTS

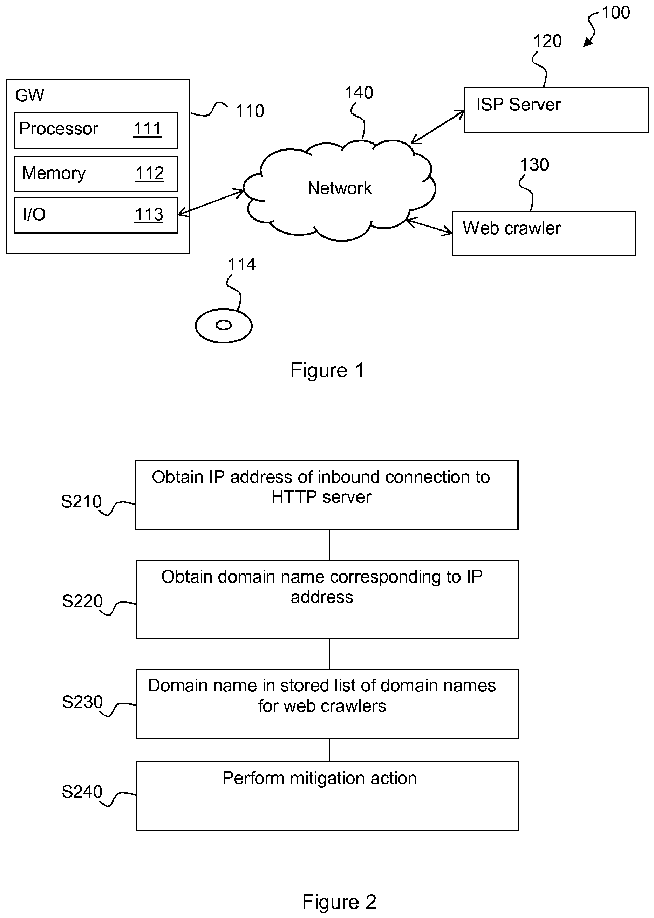

Figure 1 illustrates an exemplary system 100 implementing the present principles. The system 100 comprises a gateway (GW) 110 and an ISP server 120 operably connected through a network 140, such as for example the Internet. Figure 1 also illustrates a conventional Web crawler device 130 configured to search the Internet for devices such as the GW 110.

The GW 110 includes at least one hardware processing unit ("processor") 111 configured to run a local HTTP server with an administration page and to execute instructions of a software program to determine if the GW is open to the network 140, as further described herein. The GW 110 further includes memory 112 configured to store at least one of the software program and a list of identifiers, such as domain names, of web crawlers including for instance at least one of the major (e.g. those believed to have the most resources) web crawlers, and at least one communication interface ("I/O") 113 configured interact with other devices over the network 140.

Non-transitory storage media 114 stores a software program with instructions that, when executed by at least one hardware processor, performs the functions of the GWs 110 as further described hereinafter, and possibly the list of identifiers of web crawlers.

The skilled person will appreciate that the illustrated GW is very simplified for reasons of clarity and that features such as internal connections and power supplies have been omitted for reasons of clarity.

Figure 2 illustrates a method for determining if a gateway is vulnerable according to an embodiment of the present principles.

In step S210, the processor 111 obtains an inbound connection to a local HTTP server maintained by the GW 110.

The processor 111 may for example obtain the inbound connection as the connection occurs, for example by having the communication interface 113 intercept the connection and send the source IP address of the connection to the processor 111.

Another possibility is for the processor 111 to check a connection log. For instance, in the case where the local server software is Apache 2, the IP addresses of devices accessing the administrative login page are stored in a log file, typically /var/log/apache/access.log. In this case, the processor 111 may obtain a plurality of IP addresses, in which case the processor 111 performs following steps S220-S230 for each obtained IP address. In the variant, the processor 111 can keep track of the IP addresses it has already obtained in order to avoid verifying all the IP addresses in the log each time step S210 is performed.

In step S220, the processor 111 performs a reverse Domain Name Server (DNS) lookup in order to obtain a domain name corresponding to the source IP address of the at least one inbound connection. This can be done using the Unix host command, ping or nslookup. An example is:

```
       > host 66.249.66.1
       1.66.249.66.in-addr.arpa domain name pointer crawl-66-
       249-66-1.googlebot.com.
```

In step S230, the processor 111 determines whether the obtained domain is included in the list of identifiers (stored in the memory 112 for instance). The list includes identifiers, such as in the present embodment domain names, for at least some known web search engines such as "googlebot.com" and "google.com" for Google. In case the domain name is included in the list, then the process 111 can conclude that a web crawler has connected to the GW; hence, the GW is open to the network 140.

It will be appreciated that the list of identifiers alternatively is stored external to the device such as on a remote device, for example on an internal network (not shown) managed by the GW or connected to the network 140, or in "the cloud". The processor 111 can in this case for example download at least a relevant part of the list of identifiers or ask the remote device if the identifier is in the list or not.

In case the GW is open to the network 140, in step S240, the processor 111 can perform an action intended to mitigate a possible threat. Examples of actions include:
- refusing the inbound connection;
- closing a firewall of the GW against all IP addresses;
- rendering an alert message on a user interface (not shown) of the GW;
- sending an alert message to the ISP via the interface 113; and
- sending an alert message to a user via the interface 113, for instance by mail or as a popup on a service enjoyed by the user.

IP addresses may be used instead of domain names. In this case, the memory stores a list of IP addresses, step S220 is skipped and, in step S230, the processor checks if the obtained IP address is found in the list. However, a reason for using domain names rather than IP addresses is that IP addresses tend to be more volatile than domain names.

The skilled person will appreciate that it can be assumed that if no "major" web crawler, or more generally if no known web crawler, manages to get a webpage from a GW, it is likely that this means that the GW is not open to any device from the network.

In a variant, the crawling can be performed by the ISP itself on its own IP ranges.

It will thus be appreciated that the present principles can provide a solution for determining if a GW is open to a network.

While the present principles have been described with reference to gateways, the skilled person will understand that these principles readily extend to other network devices that normally should be closed to connections from the Internet. Examples of such a device are cable modems and Network-Attached Storage (NAS) devices. In addition, HTTP has been used as a non-limitative example that can readily be extended to other suitable communication protocols such as HTTPS.

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces. Herein, the phrase "coupled" is defined to mean directly connected to or indirectly connected with through one or more intermediate components. Such intermediate components may include both hardware and software based components.

The present description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and non-volatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

## Claims

1. A device (110) comprising:
a communication interface (113) configured to receive an inbound connection via a network (140); and
at least one hardware processor (111) configured to:
obtain a first identifier of an originating device from the inbound connection;
determine that the device is open to the network (140) in case the first identifier is on a list of second identifiers corresponding to web search engines; and
in case the device is open to the network (140), perform an action intended to result in the device being closed to the network (140).

2. The device of claim 1, further comprising memory (112) configured to store the list of identifiers corresponding to web search engines.

3. The device of claim 1, wherein the first identifier is an Internet Protocol address, the second identifiers are domain names and wherein the at least one hardware processor is further configured to obtain a domain name corresponding to the IP address;

4. The device of claim 1, wherein the action is at least one of: refusing the inbound connection, sending an alert message, rendering an alert message on a user interface of the device, and closing a firewall of the device against IP addresses.

5. The device of claim 1, wherein the at least one hardware processor (111) is configured to obtain the IP address by reading a log for incoming connections.

6. The device of claim 1, wherein the device is a gateway, a cable modem or a network-attached storage.

7. The device of claim 1, wherein the domain name is obtained using reverse Domain Name Server (DNS).

8. The device of claim 1, wherein the inbound connection is a HyperText Transfer Protocol (HTTP) connection.

9. A method for determining if a device (110) is open to a network (140), the method comprising, at the device (110):
obtaining (S210) by at least one hardware processor (111) a first identifier of an originating device from an inbound connection;
determining (S230), by the at least one hardware processor (111), that the device (110) is open to the network (140) in case the obtained first identifier is on a list of second identifiers corresponding to web search engines; and
in case the device (110) is open to the network (140), performing an action intended to result in the device being closed to the network (140).

10. The method of claim 9, wherein the action is at least one of: refusing the inbound connection, sending an alert message, rendering an alert message on a user interface of the device,and closing a firewall of the device against IP addresses.

11. The method of claim 9, wherein the obtaining is performed by reading a log for incoming connections.

12. The method of claim 9, wherein the first identifier is an Internet Protocol address and the second identifiers are domain names, and wherein the method further comprises obtaining (S220), by the at least one hardware processor, a domain name corresponding to the Internet Protocol address.

13. The method of claim 12, wherein the domain name is obtained using reverse Domain Name Server (DNS).

14. Computer program comprising program code instructions executable by a processor for implementing a method according to any one of claims 9-13.

15. Computer program product that is stored on a non-transitory computer readable medium (101) and comprises program code instructions executable by a processor for implementing a method according to any one of claims 9-13.
